# EUROPÄISCHE PATENTSCHRIFT

(11) **EP 0 859 175 B1**
(45) Veröffentlichungstag und Bekanntmachung des Hinweises auf die Patenterteilung: **25.06.2003**
(21) Anmeldenummer: 98100901.2
(22) Anmeldetag: 20.01.1998
(51) Int. Cl.: F16K 1/34, F16K 1/42, F16K 25/00

(54) **Ventil**
Valve
Soupape

(30) Priorität: 18.02.1997 DE 19706264
(43) Veröffentlichungstag der Anmeldung: 19.08.1998
(73) Patentinhaber: Nass Magnet GmbH, 30179 Hannover (DE)
(72) Erfinder: Hiddessen, Ralf, 31275 Lehrte/Arpke (DE)
(74) Vertreter: Tetzner, Michael, Dipl.-Ing.

(56) Entgegenhaltungen:
- FR-A- 1 236 394
- FR-A- 2 161 537
- GB-A- 629 720
- US-A- 2 970 802

## Beschreibung

Die Erfindung betrifft ein Ventil mit einem in einem Gehäuse zwischen einer Öffnungs- und einer Schließstellung hin- und herbeweglichen Kolben, wobei der Kolben einen ersten Kontaktbereich aufweist, der in der Schließstellung mit einem zweiten Kontaktbereich am Gehäuse in Kontakt kommt.

Zur Gewährleistung eines guten Dichtsitzes des Kolbens in der Schließstellung müssen bei der Herstellung von Kolben und Ventilsitz oftmals sehr enge Toleranzen eingehalten werden. Die Einhaltung dieser Toleranzen erhöht jedoch die Herstellungskosten erheblich.

Aus der DE-A-30 15 487 ist ein Ventil bekannt, das jedoch ein zusätzliches Dichtelement aufweist, das dann in Funktion tritt, wenn das tellerförmige Dichtelement bricht. Auch bei diesem bekannten Ventilsitz müssen noch relativ enge Toleranzen eingehalten werden, um einen guten Dichtsitz zu gewährleisten.

In der FR-A-2 161 537 ist ferner ein Ventil offenbart, bei dem die beiden Kontaktbereiche durch einen am Kolben vorgesehenen Konus und eine am Gehäuse vorgesehene Biegelippe gebildet werden.

Die FR-A-1 236 394 offenbart ebenfalls ein Ventil mit Biegelippe.

Der Erfindung liegt daher die Aufgabe zugrunde, das Ventil gemäß dem Oberbegriff des Anspruches 1 derart auszugestalten, daß sich die Herstellungkosten verringern. Erfindungsgemäß wird diese Aufgabe durch die kennzeichnenden Merkmale des Anspruches 1 gelöst. Hierbei ist der Kolben derart ausgestaltet und die Biegelippe derart verformbar, daß - bei der Montage des Ventils - der Kolben im Bereich des größeren zweiten Durchmessers der Konusfläche durch die Öffnung der einstückig mit dem Gehäuse ausgebildeten Biegelippe durchgedrückt werden kann.

Indem der Kolben bei der Montage durch die Öffnung der Biegelippe durchgedrückt wird, kommt es einerseits zu einer plastischen und andererseits zu einer elastischen Verformung der Biegelippe. Nach Durchlassen des Konusbereiches des Kolbens wird sich die Öffnung der Biegelippe wieder entsprechend dem elastischen Anteil verkleinern. Der größte Durchmesser des Kolbens in diesem Bereich darf daher ein Übermaß haben, das im Bereich ,der maximalen plastischen und elastischen Verformbarkeit der Biegelippe liegt. Dabei bestimmt das Maß der plastischen Verformbarkeit der Biegelippe die für den Kolben tolerierbare Toleranz.

Weitere Ausgestaltungen der Erfindung sind Gegenstand der Unteransprüche.

Weitere Vorteile und Ausgestaltungen der Erfindung werden anhand der Beschreibung zweier Ausführungsbeispiele und der Zeichnung näher erläutert.

In der Zeichnung zeigen
- Fig.1: eine geschnittene Darstellung eines Ventils gemäß einem ersten erfindungsgemäßen Ausführungsbeispiel,
- Fig.2: eine geschnittene Detailansicht des ersten Ausführungsbeispieles im Dichtbereich und
- Fig.3: eine geschnittene Darstellung eines Ventils gemäß einem zweiten erfindungsgemäßen Ausführungsbeispiel.

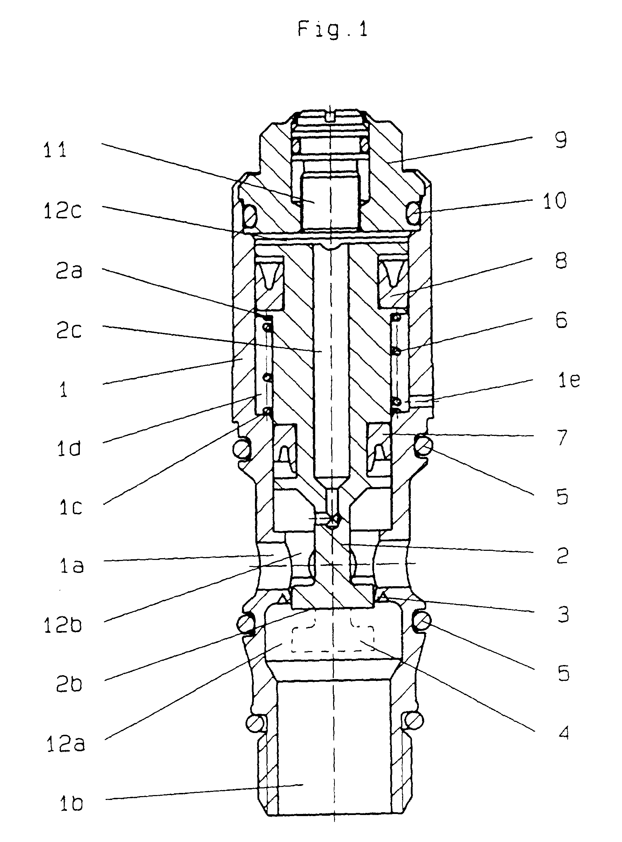

Das in Fig.1 dargestellte Ventil besteht im wesentlichen aus einem Gehäuse 1 und einem in diesem zwischen einer Öffnungs- und einer Schließstellung hin- und herbeweglichen Kolben 2. In der gezeigten Schließstellung kommt der Kolben mit einem Ventilsitz am Gehäuse in Kontakt, der durch eine Biegelippe 3 ausgebildet wird.

Das dargestellte Ventil ist als sogenanntes Startventil zum stufenlosen Druckaufbau in einer druckmitteldurchströmten Anlage ausgebildet. Derartige Startventile sollen gefährliche und schädliche Druckstöße in Druckluftanlagen verhindern, wie sie beim Einschalten einer zuvor abgeschalteten und entlüfteten Druckluftanlage entstehen können.

Das Gehäuse 1 des in Fig.1 dargestellten Startventils wird durch eine Hohlschraube gebildet, die eine erste Öffnung 1a und eine zweite Öffnung 1b aufweist. Die erste Öffnung 1a wird im dargestellten Ausführungsbeispiel durch vier seitliche, gleichmäßig über den Umfang des Gehäuses verteilte Bohrungen gebildet, wobei im Bereich dieser Bohrungen ein am Gehäuse lösbar befestigtes und um sich drehbares Modul vorgesehen ist, das allgemein bekannt ist und aus Gründen der Übersichtlichkeit nicht näher dargestellt ist. Dieses drehbare Modul wird über Dichtungen 5 druckdicht angeschlossen.

Im Gehäuse 1 ist ferner ein Federelement 6 vorgesehen, das den Kolben 2 in seine Schließstellung drängt. Dieses Federelement 6 stützt sich einerseits auf einem Ringabsatz 1c des Gehäuses und andererseits an einem flanschartigen Ansatz 2a des Kolbens 2 ab. Das Federelement 6 ist in einer Kammer 1d zwischen Gehäuse 1 und Kolben 2 untergebracht. Um die Kammer druckdicht gegenüber den anderen Bereichen des Gehäuses abzudichten, sind zwischen Kolben und Gehäuse eine erste und zweite Dichtung 7, 8 vorgesehen. Die Kammer 1d steht über eine Entlüftungsbohrung 1e mit der Umgebungsluft in Verbindung, so daß in ihr der Umgebungsdruck vorherrscht.

Die zweite Öffnung 1b ist im Bereich des einen Endes der Hohlschraube vorgesehen, während das andere Ende mittels eines Verschlußelementes 9 und einer eingelegten Dichtung 10 druckdicht abgeschlossen ist.

Das dargestellte Startventil wird im Bereich seiner ersten Öffnung 1a über das nicht näher dargestellte drehbare Modul an ein erstes Bauteil einer druckmitteldurchströmten Anlage und mit seiner zweiten Öffnung 1b mit einem zweiten Bauteil dieser Anlage gekoppelt. Das Startventil weist ferner Mittel zur Aufrechterhaltung einer geringen Druckmittelströmung zwischen einem Bereich mit hohem Druck auf der einen Seite der Biegelippe 3 und einem Bereich mit sich aufbauendem Druck auf der anderen Seite der Biegelippe auf.

In der Öffnungsstellung nimmt der Kolben 2 etwa die in der Zeichnung gestrichelt dargestellte Stellung 4 ein. Die Mittel zur Aufrechterhaltung einer geringen Druckmittelströmung werden durch Einstellmittel 11 bewirkt, die die Bewegung des Kolbens 2 von der Öffnungs- zur Schließstellung vor Erreichen der Schließstellung begrenzen. Dadurch bildet sich zwischen der Biegelippe 3 und dem Kolben eine ringförmige Drosselöffnung aus, durch die eine geringe Druckmittelströmung aufrechterhalten werden kann.

Im dargestellten Ausführungsbeispiel liegt der hohe Druck im Bereich der zweiten Öffnung 1b an. Bei dieser Ausgangssituation läßt sich das Startventil in die folgenden drei Bereiche 12a, 12b und 12c unterteilen.

Der erste Bereich 12a ist im Bereich der zweiten Öffnung 1b vorgesehen und wird durch die innere Wandung des Gehäuses 1 im Bereich der zweiten Öffnung 1b und das stirnseitige Ende 2b des Kolbens 2 im Bereich des Ventilsitzes begrenzt.

Über die durch die Biegelippe 3 und den Kolben 2 gebildete ringförmige Drosselöffnung gelangt der hohe Druck allmählich in den zweiten Bereich 12b, der durch eine innere Wandung des Gehäuses 1 und eine äußere Wandung des Kolbens 2 begrenzt wird. An der einen Berührungsstelle von Gehäuse und Kolben ist die erste Dichtung 7 vorgesehen und an der anderen Stelle befindet sich die Biegelippe 3. Im zweiten Bereich 12b herrscht somit der sich aufbauende Druck.

Da die Wirkfläche am Kolben im ersten Bereich 12a, die im wesentlichen durch das stirnseitige Ende 2b gebildet wird, als auch die Gesamtwirkfläche am Kolben im zweiten Bereich 12b den Kolben in die Schließstellung drängen, muß eine weitere Wirkfläche vorgesehen werden, die in einem dritten Bereich 12c am entgegengesetzten Ende des Kolbens 2 vorgesehen ist. Der Kolben 2 weist hierfür einen inneren Kanal 2c auf, der den zweiten Bereich 12b mit dem dritten Bereich 12c verbindet. Im dritten Bereich 12c herrscht somit auch der sich aufbauende Druck vor. Die Wirkfläche am Kolben im dritten Bereich drängt den Kolben in seine Öffnungsstellung und wirkt somit der Wirkfläche des ersten Bereichs entgegen. Da die Wirkfläche im dritten Bereich wesentlich größer als die des ersten Bereichs ist, wird der Kolben 2 in seine Öffnungsstellung bewegt, wenn die Differenz des hohen und des sich aufbauenden Drucks einen Schwellenwert unterschreitet.

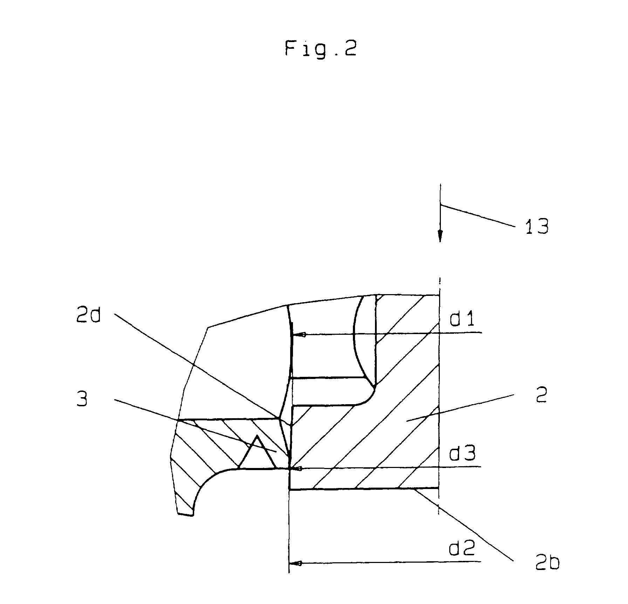

Anhand von Fig.2 sollen im folgenden die Verhältnisse im Bereich der Biegelippe 3 näher dargestellt werden.

Die Biegelippe 3 ist ringförmig geschlossen ausgebildet.

Sie wird vorzugsweise als metallische Biegelippe vorgesehen, wobei sie einstückig mit dem Gehäuse 1 ausgebildet ist.

In der Schließstellung kommt die Biegelippe 3 mit einem Bereich 2d des Kolbens in Kontakt, der als Konusfläche ausgebildet ist. Der Durchmesser des Kolbens 2 im Bereich der Konusfläche steigt von einem ersten Durchmesser d₁ auf einen größeren zweiten Durchmesser d₂ an.

Die Biegelippe 3 weist einen Öffnungsdurchmesser d₃ auf, der größer als der erste Durchmesser d₁, jedoch kleiner als der zweite Durchmesser d₂ des Kolbens 2 im Bereich der Konusfläche ist.

Die Biegelippe 3 kommt daher irgendwo zwischen dem kleinen und großen Durchmesser d₁, d₂ des Kolbens im Bereich 2d mit der Konusfläche in Kontakt.

Die Biegelippe 3 weist eine derartige Verformbarkeit auf, daß der Kolben 2 bei der Montage des Ventils - in Richtung des Pfeiles 13 - im Bereich des größeren zweiten Durchmessers d₂ der Konusfläche durch die Öffnung der Biegelippe durchgedrückt werden kann. Dabei weitet sich der Öffnungsdurchmesser d₃ der Biegelippe 3 bis auf den Durchmesser d₂ des Kolbens 2 auf, wenn man davon ausgeht, daß der Kolben unendlich steif ist.

Bei diesem Vorgang kommt es einerseits zu einer plastischen und andererseits zu einer elastischen Verformung der Biegelippe. Nach Durchlassen des Konus wird sich die Öffnung der Biegelippe wieder entsprechend dem elastischen Anteil verkleinern.

Der größte Durchmesser des Kolbens in diesem Bereich darf daher ein Übermaß haben, das im Bereich der maximalen plastischen und elastischen Verformbarkeit der Biegelippe liegt. Dabei bestimmt das Maß der plastischen Verformbarkeit der Biegelippe die für den Kolben tolerierbare Toleranz.

Durch Ausbildung der Biegelippe 3 als metallische Biegelippe 3 kommt es nicht zu einem vorzeitigen Verschleiß in diesem Bereich. Bei der Montage des Kolbens müssen durch die Elastizität der Biegelippe nur geringe Kräfte überwunden werden, um den Kolben durch die engere Öffnung der Biegelippe durchzudrücken. Ein Verbiegen des Kolbens kann daher vermieden werden.

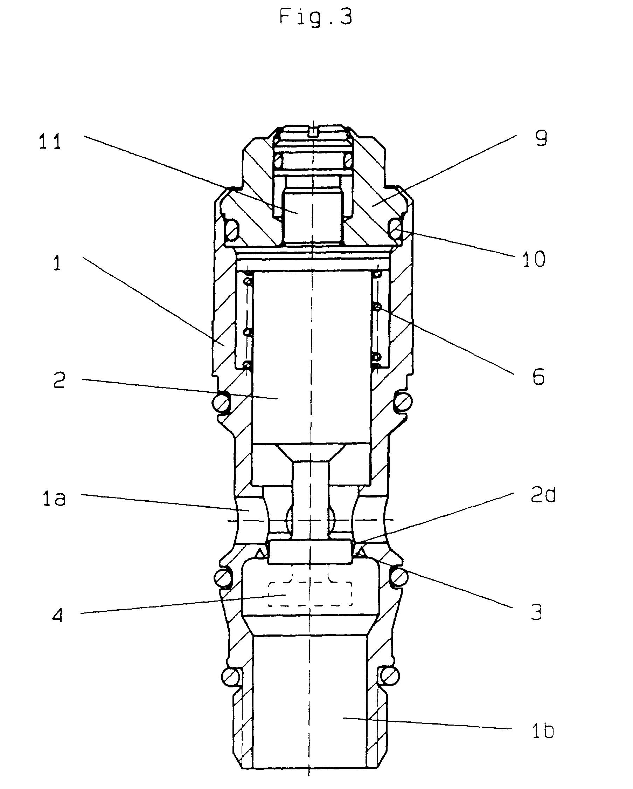

In Fig.3 ist ein zweites Ausführungsbeispiel dargestellt, bei dem das Ventil als Drosselrückschlagventil ausgebildet ist. Da es in vielen Bereichen und Bauteilen mit dem in Fig.1 dargestellten Startventil übereinstimmt, wurden für gleiche Bauteile auch dieselben Bezugszeichen verwendet. So entspricht insbesondere auch die Ausgestaltung des Ventilsitzes als Biegelippe 3 und der mit ihr in Kontakt kommende Bereich des Kolbens 2 mit der Darstellung gemäß Fig.2 überein.

Die Einstellmittel 11 ermöglichen wiederum die Einstellung eines Drosselringspaltes zwischen Biegelippe 3 und dem Konus am Kolben 2.

Der wesentliche Unterschied zum ersten Ausführungsbeispiel besteht darin, daß der Kolben 2 gemäß Fig.3 keinen inneren Kanal 2c aufweist und daß die Dichtungen 7 und 8 gemäß Fig.1 nicht vorgesehen sind. Die Funktion des Rückschlagventils gemäß Fig.3 ist daher wie folgt:

Liegt am Anschluß im Bereich der Öffnung 1a ein höherer Druck an als beim Anschluß im Bereich der zweiten Öffnung 1b, wird der Kolben in die gestrichelt dargestellte Öffnungsstellung 4 gedrückt, sobald die Druckdifferenz so groß ist, daß die Kraft des Federelementes 6 überwunden wird. Wird diese Druckdifferenz wieder unterschritten, wird der Kolben mittels des Federelements in seine Schließstellung bzw. in seine Anschlagstellung mit den Einstellmitteln gedrängt.

In beiden Ausführungsbeispielen wird die relative Lage des Kolbens 2 in der Schließstellung, d.h. bei Kontakt mit der Biegelippe 3, selbsttätig eingenommen und hängt im wesentlichen von den Fertigungstoleranzen, der Steigung des Konus, der Elastizität der Biegelippe 3 und der Kraft des Federelements 6 ab. Ausgehend von dieser Ruhelage des Kolbens in der Schließstellung läßt sich mit Hilfe der Einstellmittel 11, die beispielsweise als Einstellschraube ausgebildet sind, auf besonders einfache und definierte Weise eine bestimmte Drosselringöffnung zwischen Biegelippe 3 und Kolben 2 einstellen. Bei bekannter Gewindesteigung der Einstellschraube und bekannter Steigung des Konus am Kolben 2 läßt sich auf einfache Weise die Größe der ringförmigen Drosselöffnung durch die Anzahl der Umdrehungen der Einstellschraube bestimmen.

Bei beiden Ausführungsbeispielen weist der Kolben einen ersten Kontaktbereich auf, der in der Schließstellung mit einem zweiten Kontaktbereich am Gehäuse in Kontakt kommt. Dabei wird der erste Kontaktbereich am Kolben durch den Konus und der zweite Kontaktbereich am Gehäuse durch die Biegelippe gebildet.

## Patentansprüche

1. Ventil mit einem in einem Gehäuse (1) zwischen einer Öffnungs- und einer Schließstellung hin- und herbeweglichen Kolben (2), wobei der Kolben einen ersten Kontaktbereich aufweist, der in der Schließstellung mit einem zweiten Kontaktbereich am Gehäuse in Kontakt kommt, wobei der zweite Kontaktbereich am Gehäuse als Biegelippe (3) und der erste Kontaktbereich am Kolben als Konus ausgestaltet ist, wobei der Konus von einem ersten Durchmesser (d₁) auf einen größeren zweiten Durchmesser (d₂) ansteigt, wobei der Kolben derart ausgestaltet und die Biegelippe derart verformbar ist, daß - bei der Montage des Ventils - der Kolben im Bereich des größeren zweiten Durchmessers (d₂) der Konusfläche durch die Öffnung der Biegelippe durchdrückbar ist, **dadurch gekennzeichnet, daß** die Biegelippe (3) einstückig mit dem Gehäuse (1) ausgebildet ist.

2. Ventil nach Anspruch 1, **dadurch gekennzeichnet, daß** die Biegelippe zumindest teilweise plastisch verformbar ausgebildet ist.

3. Ventil nach Anspruch 1, **dadurch gekennzeichnet, daß** die Biegelippe (3) ringförmig geschlossen ausgebildet ist.

4. Ventil nach Anspruch 1, **dadurch gekennzeichnet, daß** die Biegelippe (3) metallisch ausgebildet ist.

5. Ventil nach Anspruch 1, **dadurch gekennzeichnet, daß** ferner ein den Kolben (2) in die Schließstellung drängendes Federelement (6) vorgesehen ist.

6. Ventil nach Anspruch 1, **dadurch gekennzeichnet, daß** mit dem Kolben (2) zusammenwirkende Einstellmittel (11) vorgesehen sind, die die Bewegung des Kolbens von der Öffnungs- zur Schließstellung vor Erreichen der Schließstellung begrenzen.

## Claims

1. Valve with a piston (2) which is movable to and fro in a housing (1) between an open and a closed position, wherein the piston has a first contact zone which in the closed position comes into contact with a second contact zone on the housing, wherein the second contact region on the housing is configured as a bending lip (3) and the first contact region on the piston is configured as a cone, the cone increasing from a first diameter (d₁) to a greater second diameter (d₂), and wherein the piston is configured in such a way and the bending lip is deformable in such a way that - when the valve is installed - the piston can be pushed through the opening of the bending lip in the region of the greater second diameter (d₂) of the conical surface, **characterised in that** the bending lip (3) is constructed integrally with the housing (1).

2. Valve as claimed in Claim 1, **characterised in that** the bending lip is constructed so as to be at least partially plastically deformable.

3. Valve as claimed in Claim 1, **characterised in that** the bending lip (3) is constructed so as to be closed in the form of a ring.

4. Valve as claimed in Claim 1, **characterised in that** the bending lip (3) is of metal construction.

5. Valve as claimed in Claim 1, **characterised in that** a spring element (6) is also provided which pushes the piston (2) into the closed position.

6. Valve as claimed in Claim 1, **characterised in that** adjusting means (11) are provided which co-operate with the piston (2) and limit the movement of the piston from the open position to the closed position before reaching the closed position.

## Revendications

1. Soupape avec un piston (2) dans un boîtier (1), mobile entre une position d'ouverture et une position de fermeture, le piston disposant d'une première zone de contact, qui, en position de fermeture, entre en contact avec une deuxième zone de contact du boîtier, la deuxième zone de contact du boîtier consistant en une lèvre de flexion (3) et la première zone de contact du piston étant réalisée en cône, où le cône progresse d'un premier diamètre (d₁) à un deuxième diamètre (d₂) plus grand, et où le piston est réalisé et la lèvre de flexion est déformable de telle façon que, lors du montage de la soupape, le piston, au niveau du deuxième diamètre(d₂) plus grand de la surface du cône, peut être poussé au travers de l'ouverture de la lèvre de flexion, **caractérisé en ce que** la lèvre de flexion (3) est conçue en une seule pièce avec le boîtier.

2. Soupape selon la revendication 1, **caractérisée en ce que** la lèvre de flexion est conçue au moins en partie, déformable de manière plastique.

3. Soupape selon la revendication 1, **caractérisée en ce que** la lèvre de flexion (3) est conçue de manière annulaire et fermée.

4. Soupape selon la revendication 1, **caractérisée en ce que** la lèvre de flexion (3) est métallique.

5. Soupape selon la revendication 1, **caractérisée en ce que**, entre autres, un élément de ressort (6) est prévu poussant le piston (2) en position de fermeture.

6. Soupape selon la revendication 1, **caractérisée en ce que** des éléments de réglage (11) oeuvrant avec le piston (2) sont prévus, limitant la mobilité du piston de la position d'ouverture à la position de fermeture avant l'arrivée à la position de fermeture.
